# EUROPEAN PATENT APPLICATION

(11) **EP 2 750 440 A2**
(43) Date of publication of application: **02.07.2014**
(21) Application number: 13275076.1
(22) Date of filing: 22.03.2013
(51) Int. Cl.: H04W 28/16

(54) **Electronic shelf labeling system and method of operating electronic shelf labeling system**

(30) Priority: 28.12.2012 KR 20120156850
(71) Applicant: Samsung Electro-Mechanics Co., Ltd, Suwon, Gyunggi-Do (KR)
(72) Inventor: Hwang, Sung Ho, Gyunggi-do (KR); Lee, Chung Hee, Gyunggi-do (KR)
(74) Representative: Potter Clarkson LLP

(57) **Abstract**

There are provided an electronic shelf labeling system and a method of operating an electronic shelf labeling system. The method is performed in a gateway capable of being wirelessly connected to a plurality of electronic shelf labeling tags and providing data provided from an electronic shelf labeling server to the plurality of electronic shelf labeling tags through a data channel. The method includes transmitting download data to and at least a portion of the plurality of electronic shelf labeling tags, broadcasting a control message including information regarding a subsequent time period for transmitting subsequent download data, to the plurality of electronic shelf labeling tags, and receiving, in a current time period, upload data provided from at least one electronic shelf labeling tag.

## Description

### CROSS-REFERENCE TO RELATED APPLICATIONS

This application claims the priority of Korean Patent Application No. 10-2012-0156850 filed on December 28, 2012, in the Korean Intellectual Property Office, the disclosure of which is incorpora3ted herein by reference.

### BACKGROUND OF THE INVENTION

### Field of the Invention

The present invention relates to an electronic shelf labeling system and a method of operating the electronic shelf labeling system.

### Description of the Related Art

In accordance with advancement of tag technology and local wireless communications, various systems based on a tag have been provided. An example of the above-mentioned tag based system is an electronic shelf labeling system, wherein the electronic shelf labeling system is applied to an environment such as a hypermarket or the like frequently providing a variety of articles for sale.

The above-mentioned electronic shelf labeling system may be provided by establishing a wireless personal area network based on a local wireless communications technology such as ZigBee and the like.

The electronic shelf labeling system includes a gateway providing data provided from a server to an electronic shelf labeling tag and the electronic shelf labeling tag providing product information based on the data provided from the gateway, wherein the gateway and the electronic shelf labeling tag transmit and receive data through wireless communications using a wireless communications channel.

Here, the gateway and the electronic shelf labeling tag may bidirectionally transmit data based on the wireless communications channel.

However, in this case, when the data is transmitted over the wireless communications channel, data collision may occur. For example, the data collision may occur between the gateway and the electronic shelf labeling tag, or between electronic shelf labeling tags.

In order to prevent such a collision, an electronic shelf labeling system having a Carrier Sensing Multiple Access/Collision Avoidance (CSMA/CA) scheme applied thereto, in which whether or not channel is used is confirmed using Clear Channel Assessment (CCA) and then data is transmitted, has recently been provided.

However, in the case in which the above-mentioned CCA is used, since the wireless communications channel may be used in an order in which the wireless communications channel is first occupied by data, it may be difficult to occupy the wireless communications channel, based on importance of data.

That is, the data provided from the gateway needs to be first transmitted to rapidly update display data of the electronic shelf labeling tag. However, the method according to the related art does not satisfy the above-mentioned need.

The following related art documents relate to the above-mentioned related art but fail to propose a solution for the foregoing problem.

### [Related Art Document]

Korean Patent Laid-Open Publication No. 2012-0113064
Korean Patent Laid-Open Publication No. 2011-0071484

### SUMMARY OF THE INVENTION

An aspect of the present invention provides an electronic shelf labeling system capable of providing priority in transmitting data by giving priority in accessing to a wireless communications channel to a gateway using a control message including time of transmission of download data to be transmitted by the gateway, and a method of operating the electronic shelf labeling system.

According to an aspect of the present invention, there is provided a method of operating an electronic shelf labeling system performed in a gateway capable of being wirelessly connected to a plurality of electronic shelf labeling tags and providing data provided from an electronic shelf labeling server to the plurality of electronic shelf labeling tags through a data channel, the method including: transmitting download data to at least a portion of the plurality of electronic shelf labeling tags; broadcasting, to the plurality of electronic shelf labeling tags, a control message including information regarding a subsequent time period for transmitting subsequent download data; and receiving, in a current time period, upload data provided from at least one electronic shelf labeling tag.

The gateway may transmit and receive the download data, the control message, and the upload data to and from the plurality of electronic shelf labeling tags using a single wireless communications channel.

The method may further include adjusting the subsequent time period using the number of the electronic shelf labeling tags occupying the wireless communications channel or the number of time slots used by the upload data in the current time period.

The adjusting of the subsequent time period may include: calculating an occupation variable of the wireless communications channel for the current time period using the number of the electronic shelf labeling tags and the number of the time slots; and determining an assignment time of the subsequent time period by comparing a first occupation variable for a previous time period with a second occupation variable for the current time period.

The determining of the assignment time of the current time period may include: calculating weight according to a ratio of the second occupation variable to the first occupation variable; and determining the assignment time of the subsequent time period by reflecting the weight in the assignment time of the current time period.

According to another aspect of the present invention, there is provided a method of operating an electronic shelf labeling system performed in electronic shelf labeling tags matched with a gateway in a ratio of 1 to N and capable of receiving download data provided from the gateway through a single wireless communications channel, the method including: receiving, from the gateway, a control message including information regarding the subsequent time period for transmitting subsequent download data; determining the subsequent time period using the control message and determining whether or not the single wireless communications channel is currently occupied when the subsequent time period arrives; and when the single wireless communications channel is not occupied, transmitting upload data using the single wireless communications channel.

The single wireless communications channel may be divided into a plurality of time slots having a predetermined time interval assigned thereto, and the information regarding the subsequent time period may include first time slot information regarding a point in time at which a time period starts and second time slot information regarding a point in time for terminating the time period.

The determining of whether or not the single wireless communications channel is currently occupied may include transmitting clear channel assessment (CCA) for determining the occupation to the wireless communications channel to thereby determine whether or not the single wireless communications channel is currently occupied.

The method may further include receiving the download data provided from the gateway.

According to another aspect of the present invention, there is provided an electronic shelf labeling system including a gateway and a plurality of electronic shelf labeling tags managed by the gateway, including: a gateway broadcasting, to the plurality of electronic shelf labeling tags, a control message including information regarding a subsequent time period for transmitting subsequent download data and transmitting the download data to at least a portion of the plurality of electronic shelf labeling tags when the subsequent time period arrives; and a plurality of electronic shelf labeling tags transmitting upload data to the gateway by determining the subsequent time period using the control message and determining whether or not a single wireless communications channel is currently occupied when the subsequent time period arrives.

The gateway may transmit and receive the download data, the control message, and the upload data to and from the plurality of electronic shelf labeling tags using the single wireless communications channel.

The single wireless communications channel may be divided into a plurality of time slots having a predetermined time interval assigned thereto, and the information regarding the subsequent time period may include first time slot information regarding a point in time at which a time period starts and second time slot information regarding a point in time for terminating the time period.

The gateway may adjust the subsequent time period using the number of the electronic shelf labeling tags occupying the wireless communications channel or the number of time slots used by the upload data in the current time period.

The gateway may calculate an occupation variable of the wireless communications channel for the current time period using the number of the electronic shelf labeling tags and the number of the time slots and determine assignment time of the current time period by comparing a first occupation variable for a previous time period with a second occupation variable for the current time period.

### BRIEF DESCRIPTION OF THE DRAWINGS

The above and other aspects, features and other advantages of the present invention will be more clearly understood from the following detailed description taken in conjunction with the accompanying drawings, in which:
FIG. 1 is a configuration view illustrating an electronic shelf labeling system according to an embodiment of the present invention;
FIG. 2 is a configuration view illustrating an electronic shelf labeling server according to an embodiment of the present invention;
FIG. 3 is a configuration view illustrating an electronic shelf labeling gateway according to an embodiment of the present invention;
FIG. 4 is a configuration view illustrating an electronic shelf labeling tag according to an embodiment of the present invention;
FIG. 5 is a flow chart illustrating a method of operating an electronic shelf labeling system according to an embodiment of the present invention;
FIG. 6 is a reference view illustrating data transmission between the gateway and the electronic shelf labeling tag according to the embodiment of the present invention;
FIGS. 7 and 8 are reference views illustrating a method of operating the electronic shelf labeling system performed in the gateway according an embodiment of the present invention; and
FIG. 9 is a reference view illustrating a method of operating the electronic shelf labeling system performed in the electronic shelf labeling tag according an embodiment of the present invention.

### DETAILED DESCRIPTION OF THE EMBODIMENTS

Hereinafter, embodiments of the inventive concept will be described in detail with reference to the accompanying drawings. The invention may, however, be embodied in many different forms and should not be construed as being limited to the embodiments set forth herein. Rather, these embodiments are provided so that this disclosure will be thorough and complete, and will fully convey the scope of the invention to those skilled in the art.

In the drawings, the shapes and dimensions of elements may be exaggerated for clarity, and the same reference numerals will be used throughout to designate the same or like elements.

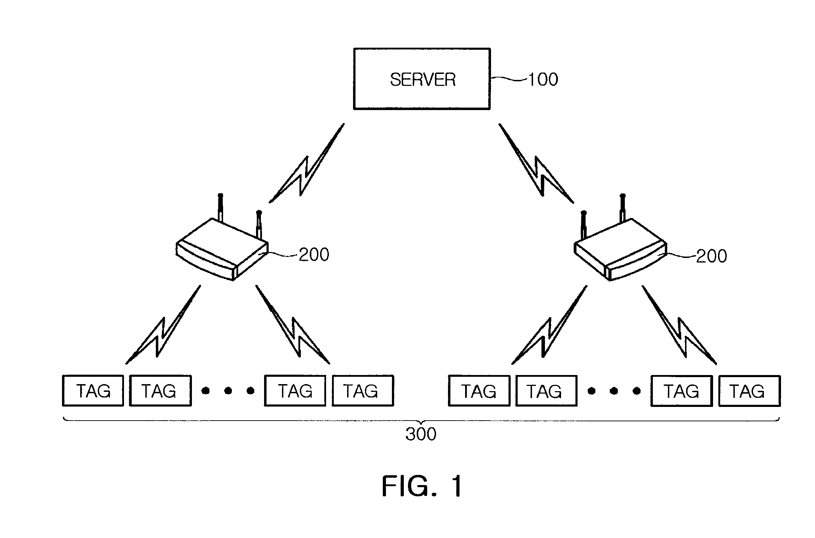

FIG. 1 is a configuration view illustrating an electronic shelf labeling system according to an embodiment of the present invention.

Referring to FIG. 1, the electronic shelf labeling system according to the embodiment of the present invention may include an electronic shelf labeling server 100, at least one gateway 200, and a plurality of electronic shelf labeling tags 300.

The electronic shelf labeling server 100 may generally manage the electronic shelf labeling system.

The electronic shelf labeling server 100 may provide product information to the electronic shelf labeling tag 300 using the at least one gateway 200. The electronic shelf labeling server 100 and the at least one gateway 200 may be connected to each other in a wired or wireless manner.

In an embodiment of the present invention, the gateway 200 and the plurality of electronic shelf labeling tags 300 may have a ratio of 1 to N (N is natural number exceeding 2).

In addition, the gateway 200 and the plurality of electronic shelf labeling tags 300 associated with the gateway 200 may perform communications using a single wireless communications channel. For example, download data, a control message, and upload data to be described below may be transmitted and received using a single wireless communications channel.

However, the present invention is not necessarily limited to the case in which only a single wireless communications channel is used, but may separately include a wakeup channel for a wakeup message and a data channel for a download data transmission according to the embodiments. However, also in this embodiment, contents for control message transmission and time period to be described below may be applied to the data channel.

Hereinafter, the present invention will be described assuming that a single wireless communications channel is used for convenience of explanation. In addition, hereinafter, a single wireless communications channel may be divided into a plurality of time slots. That is, a single wireless communications channel may be expressed as a sequence of the plurality of time slots to which a predetermined time interval is assigned.

The gateway 200 may transmit download data to the plurality of electronic shelf labeling tags 300 managed by the gateway 200 at a predetermined interval. In addition, the gateway 200 may broadcast a control message including information regarding the subsequent (subsequent) time period for transmitting subsequent download data.

Here, the broadcasting indicates that data is transmitted using a communications protocol which does not wait for a response from a transmission target. That is, the control message is transmitted while not recieving an acknowledgement from the plurality of electronic shelf labeling tags.

The electronic shelf labeling tag 300 may receive the download data from the gateway 200 to update the product information and display the updated product information. For example, the electronic shelf labeling tag 300 may display information regarding a specific product (detailed product information, price information, and the like).

In addition, the electronic shelf labeling tag 300 determines the subsequent time period using the control message provided from the gateway 200 and determines whether or not the wireless communications channel is currently occupied when the subsequent time period arrives, to thereby transmit the upload data to the gateway 200.

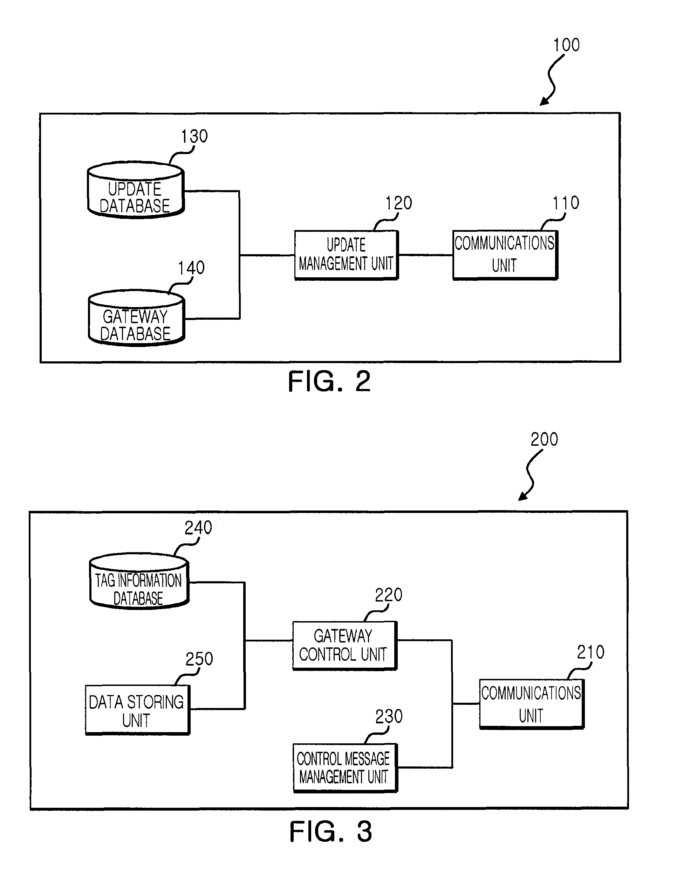

Hereinafter, the electronic shelf labeling server 100, the gateway 200, and the electronic shelf labeling tags 300 configuring the foregoing electronic shelf labeling system are described in detail with reference to FIGS. 2 through 9.

FIG. 2 is a configuration view illustrating an electronic shelf labeling server according to an embodiment of the present invention.

Referring to FIG. 2, the electronic shelf labeling server 100 may include a communications unit 110, an update management unit 120, a update database 130, and a gateway database 140.

The communications unit 110 may set a communications connection to the gateway 200 using a wired or wireless communications.

The update management unit 120 may provide the download data to the gateway 200. For example, in the case in which the download data to be provided to an electronic shelf labeling tag A is present, the electronic shelf labeling server 100 may provide the corresponding download data to a gateway A' managing the electronic shelf labeling tag A.

To this end, the electronic shelf labeling server 100 may include the gateway database 140 storing a relationship between the gateway and the electronic shelf labeling tag managed by the gateway, and update database 130 storing the download data.

In an embodiment of the present invention, the update management unit 120 may update the update database 130 using the product information provided from the outside. To this end, the electronic shelf labeling server 100 may include a predetermined outside input interface for receiving the product information from the outside.

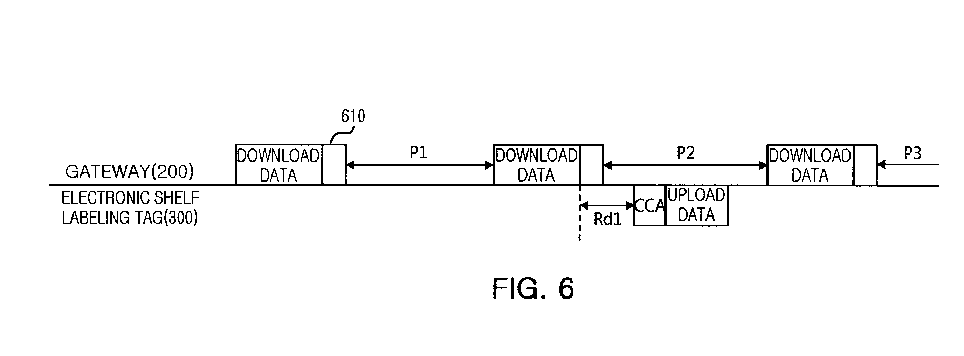

FIG. 3 is a configuration view illustrating an electronic shelf labeling gateway according to an embodiment of the present invention and FIG. 6 is a reference view illustrating data transmission between the gateway and the electronic shelf labeling tag according to the embodiment of the present invention.

Hereinafter, the gateway according to the embodiment of the present invention will be described in detail with reference to FIGS. 3 and 6.

First, referring to FIG. 3, a gateway 200 may include a communications unit 210, a gateway control unit 220, a control message management unit 230, a tag information database 240, and a data storing unit 250.

The communications unit 210 may set a communications connection to the electronic shelf labeling server 100 or the electronic shelf labeling tag 300.

In the embodiment of the present invention, the communications unit 210 may include a first communications module for communicating with the electronic shelf labeling server 100 and a second communications module for communicating with the electronic shelf labeling tag 300. For example, the first communications module may be a wired communications module and the second communications module may be a wireless communications module.

The gateway control unit 220 may control other components of the gateway 200.

The gateway control unit 220 may transmit the download data to at least a portion of the plurality of electronic shelf labeling tags 300.

In addition, the gateway control unit 220 may broadcast a control message including information regarding the subsequent time period for transmitting subsequent download data to the plurality of electronic shelf labeling tags 300.

Here, the information regarding the subsequent time period may include first time slot information regarding a point in time at which the time period starts and second time slot information regarding a point in time for terminating the time period.

Thereafter, the gateway control unit 220 may receive the upload data provided from at least one electronic shelf labeling tag in a current time period.

Describing in more detail with reference to FIG. 6, the gateway 200 and the electronic shelf labeling tag 300 may share a single wireless communications channel.

The gateway 200 may transmit the download data and may broadcast the control message 610.

The foregoing time period is from a point in time at which the download data transmission is terminated (or a point in time at which the broadcasting of the control message is terminated) to a point in time at which the subsequent download data transmission is started, where the electronic shelf labeling tag 300 may transmit the upload data in the time period.

The electronic shelf labeling tag 300 may transmit clear channel assessment (CCA) to the wireless communications channel after a predetermined random time Rd1 has elapsed from the point in time at which the time period starts to thereby determine whether or not the corresponding wireless communications channel is occupied. When the wireless communications channel is not occupied, the electronic shelf labeling tag 300 may transmit own upload data.

Here, the gateway 200 does not transmit the clear channel assessment (CCA) but provides a transmission schedule through the control message. Therefore, the gateway 200 may have a priority capable of accessing to the wireless communications channel.

The gateway 200 may adjust an interval of the time period according to a use state of the time period.

This is performed by the control message management unit 230. Again, referring to FIG. 3, the control message management unit 230 may adjust the subsequent time period using (1) the number of the electronic shelf labeling tags accessing to the gateway 200 through the wireless communications channel in the current time period or (2) the number of the time slots used by the upload data.

Here, the number of the electronic shelf labeling tags accessing to the gateway 200 through the wireless communications channel may be calculated as the number of the electronic shelf labeling tags 300 transmitting the foregoing clear channel assessment (CCA). To this end, the control message management unit 230 may monitor whether or not the clear channel assessment (CCA) is transmitted to the wireless communications channel.

In the embodiment of the present invention, the control message management unit 230 may calculate an occupation variable of the wireless communications channel for the current time period using (1) the number of the electronic shelf labeling tags accessing to the wireless communications channel and (2) the number of the time slots used by the upload data. Thereafter, the control message management unit 230 may compare a first occupation variable for a previous time period with a second occupation variable for the current time period to thereby determine an assignment time of the subsequent time period.

For example, when the second occupation variable is larger than the first occupation variable, the interval of the subsequent time period may be increased by a predetermined value (or a predetermined ratio). When the second occupation variable is larger than the first occupation variable, access of the electronic shelf labeling tag 300 to the wireless communications channel is increased, such that the subsequent time period is increased. As another example, when the second occupation variable is smaller than the first occupation variable, the assignment time of the subsequent time period may be decreased by a predetermined value (or a predetermined ratio).

In the embodiment of the present invention, the control message management unit 230 may calculate weights according to a ratio of the second occupation variable to the first occupation variable. Thereafter, the control message management unit 230 may reflect the weights in the assignment time of the current time period to thereby determine the assignment time of the subsequent time period.

The tag information database 240 may store information regarding the plurality of electronic shelf labeling tags 300 managed by the gateway 200.

The data storing unit 250 may store the update data provided from the electronic shelf labeling server 100. The update data stored in the data storing unit 250 may be transmitted to the electronic shelf labeling tag 300 as the download data by the gateway control unit 220.

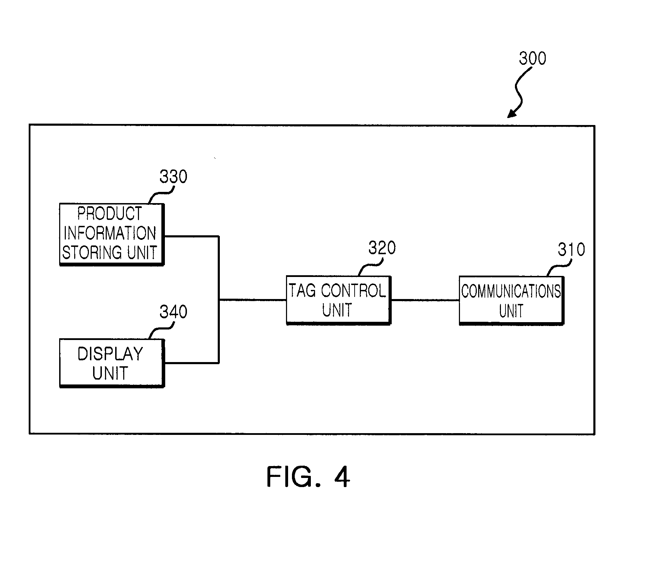

FIG. 4 is a configuration view illustrating an electronic shelf labeling tag according to an embodiment of the present invention.

Referring to FIG. 4, the electronic shelf labeling tag 300 may include a communications unit 310, a tag control unit 320, a product information storing unit 330, and a display unit 340.

The communications unit 310 may create a wireless communications environment with the gateway 200. The communications unit 310 may perform wireless communications with the communications unit 210 of the gateway using at least a single wireless communications channel.

The tag control unit 320 may control other components of the electronic shelf labeling tag 300 to drive the electronic shelf labeling tag 300. For example, the tag control unit 320 may control the product informaiton storing unit 330 so that product information stored in the product information storing unit 330 is displayed externally via the display unit 340.

The tag control unit 320 may receive the download data provided from the gateway 200 to update the product information storing unit 330.

The tag control unit 320 may provide predetermined upload data to the gateway 200.

Specifically, the tag control unit 320 may receive the control message from the gateway 200 to determine the subsequent time period to which the tag control unit 320 is accessible. The tag control unit 320 may determine the subsequent time period using the control message, and may determine whether or not a single wireless communications channel is currently occupied when the subsequent time period arrives. When a single wireless communications channel is not occupied, the tag control unit 320 may transmit the upload data to the gateway 200 using a single wireless communications channel.

In the embodiment of the present invention, the tag control unit 320 may transmit the clear channel assessment (CCA) to the wireless communications channel to thereby determine whether or not the wireless communications channel is currently occupied.

The product information storing unit 330 may store the download data provided from the update management unit 340.

The display unit 340 may display content corresponding to data stored in the product information storing unit 330 to the outside. The display unit 340 may be configured of various display units such as an LED unit, an LCD unit, and the like, but is not limited to a specific unit.

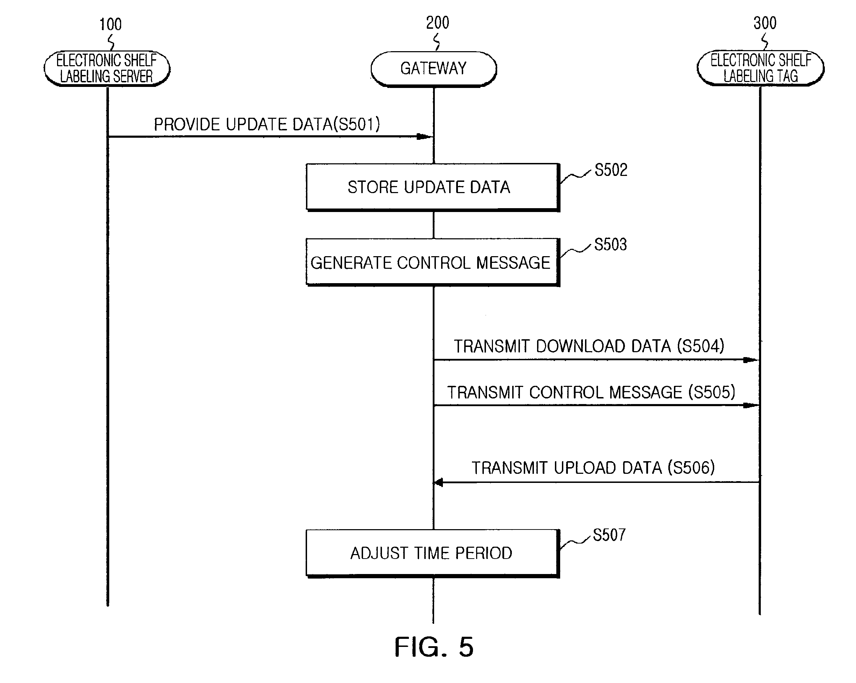

Hereinafter, various embodiments of a method of operating an electronic shelf labeling system according to an embodiment of the present invention will be described with reference to FIGS. 5 through 9. Since the various embodiments of the method of operating the electronic shelf labeling system to be described below are performed in the electronic shelf labeling system as described above with reference to FIGS. 1 through 4, contents corresponding to the contents as described above are omitted. However, those skilled in the art may clearly understand the following description based on the foregoing description.

FIG. 5 is a flow chart illustrating a method of operating an electronic shelf labeling tag according to an embodiment of the present invention.

As shown in FIG. 5, the electronic shelf labeling server 100 may provide update data to the gateway 200 (S501).

The gateway 200 may store the update data (S502). The stored update data may be provided to the electronic shelf labeling tag 300 as the download data (S504).

The gateway 200 may determine the time period to generate the control message (S503) and may transmit the control message to the electronic shelf labeling tag 300 (S505).

The electronic shelf labeling tag 300 may determine the time period capable of being occupied by the electronic shelf labeling tag 300 using the control message to thereby transmit the upload data (S506).

The gateway 200 may adjust the time period as needed (S507) and may generate the control message by reflecting the adjusted time period.

The foregoing various operations may not necessarily be performed in the order as described above. For example, the update data may not necessarily be transmitted first. In addition, the transmission of the download data and the transmission of the control message may be undertaken at the same time or in the order different from that described above.

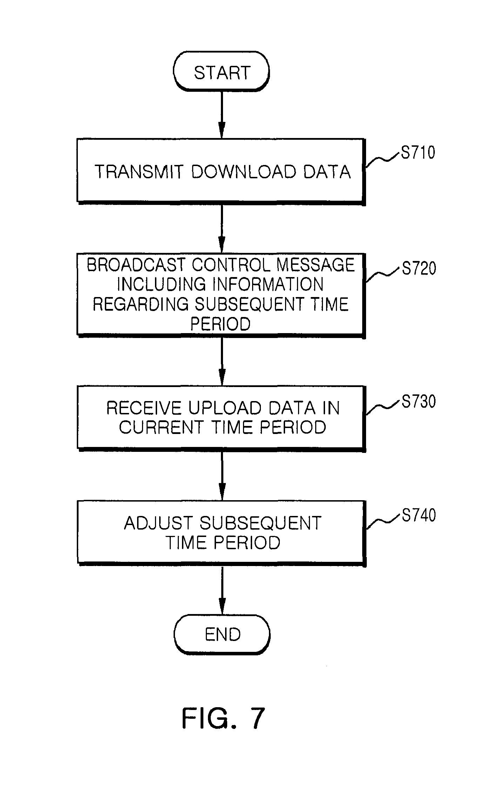

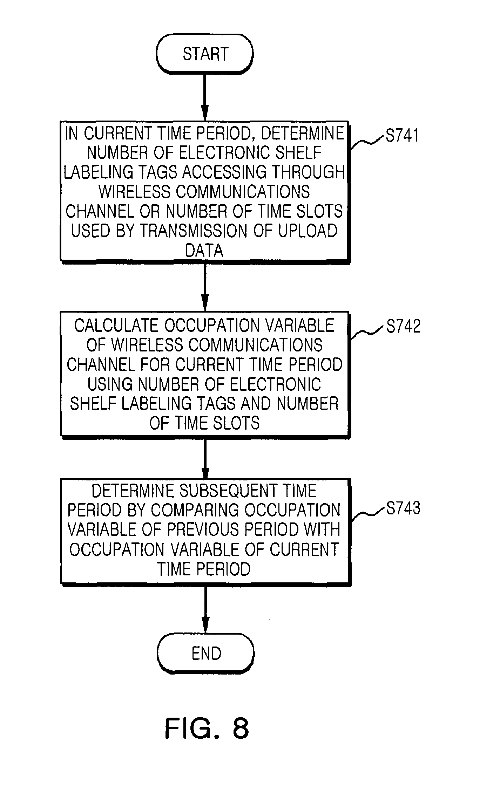

FIGS. 7 and 8 are reference views illustrating a method of operating the electronic shelf labeling system performed in the gateway according the embodiment of the present invention.

Referring to FIG. 7, the gateway 200 may transmit the download data to at least a portion of the plurality of electronic shelf labeling tags 300 (S710).

The gateway 200 may broadcast the control message including information regarding the subsequent time period for transmitting subsequent download data to the plurality of electronic shelf labeling tags 300 (S720).

Thereafter, the gateway 200 may receive the upload data provided from at least one electronic shelf labeling tag in a current time period (S730).

In the embodiment of the present invention, the gateway 200 may adjust the subsequent time period using the number of the electronic shelf labeling tags occupying the wireless communications channel or the number of the time slots used by the upload data in the current time period (S740).

The embodiment of S740 will be described in more detail with reference to FIG. 8. The gateway 200 may determine the number of the electronic shelf labeling tags accessing through the wireless communications channel and the number of the time slots used by the transmission of the upload data in the current time period (S741).

Thereafter, the gateway 200 may calculate an occupation variable of the wireless communications channel for the current time period using the number of the electronic shelf labeling tags and the number of the time slots (S742).

The gateway 200 may compare a first occupation variable for a previous time period with a second occupation variable for the current time period to thereby determine an assignment time of the subsequent time period.

Here, in the determining of the assignment time, the gateway 200 may calculate weights according to a ratio of the second occupation variable to the first occupation variable and may reflect the weights in the assignment time of the current time period to thereby determine an assignment time of the subsequent time period.

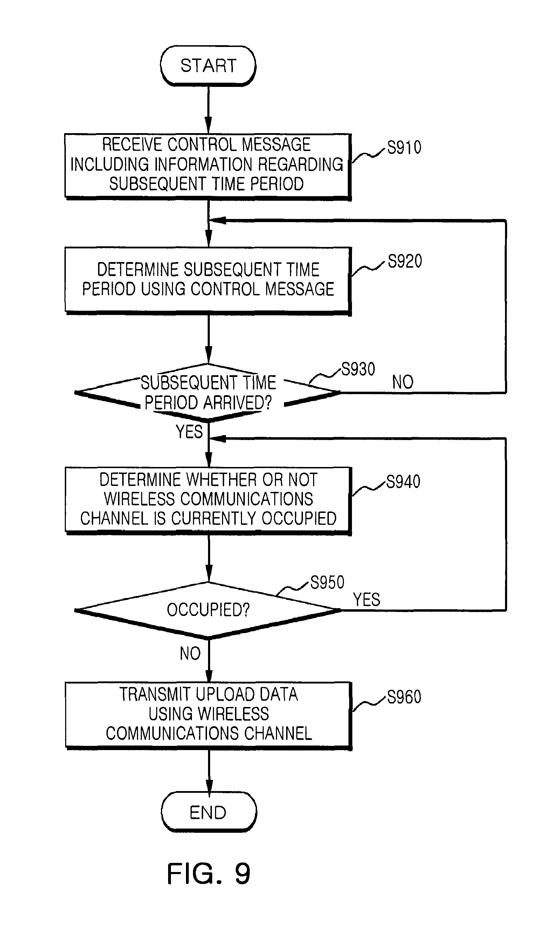

FIG. 9 is a reference view illustrating a method of operating the electronic shelf labeling system performed in the electronic shelf labeling tag according an embodiment of the present invention.

Referring to FIG. 9, the electronic shelf labeling tag 300 may receive the control message including information regarding the subsequent time period for transmitting subsequent download data from the gateway 200 (S910).

Thereafter, the electronic shelf labeling tag 300 may determine the subsequent time period using the control message (S920) and may determine whether or not a single wireless communications channel is currently occupied (S940) when the subsequent time period arrives (YES in S930).

When a single wireless communications channel is not occupied (NO in S950), the electronic shelf labeling tag 300 may transmit the upload data using the wireless communications channel (S960).

In the embodiment of S940, the electronic shelf labeling tag 300 may transmit the clear channel assessment (CCA) for determineing the occupation, to the wireless communications channel, to thereby determine whether or not a single wireless communications channel is currently occupied.

In the embodiment of the present invention, the electronic shelf labeling tag 300 may receive the download data provided from the gateway 200 to update own product information.

As set forth above, according to the embodiment of the present invention, the priority of transmitting data may be provided by giving the priority of accessing to the wireless communications channel to the gateway using the control message including time of transmission of download data to be transmitted by the gateway.

While the present invention has been shown and described in connection with the embodiments, it will be apparent to those skilled in the art that modifications and variations can be made without departing from the spirit and scope of the invention as defined by the appended claims.

## Claims

1. A method of operating an electronic shelf labeling system performed in a gateway capable of being wirelessly connected to a plurality of electronic shelf labeling tags and providing data provided from an electronic shelf labeling server to the plurality of electronic shelf labeling tags through a data channel, the method comprising:
transmitting download data to at least a portion of the plurality of electronic shelf labeling tags;
broadcasting, to the plurality of electronic shelf labeling tags, a control message including information regarding a subsequent time period for transmitting subsequent download data; and
receiving, in a current time period, upload data provided from at least one electronic shelf labeling tag.

2. The method of claim 1, wherein the gateway transmits and receives the download data, the control message, and the upload data to and from the plurality of electronic shelf labeling tags using a single wireless communications channel.

3. The method of claim 2, further comprising adjusting the subsequent time period using the number of the electronic shelf labeling tags occupying the wireless communications channel or the number of time slots used by the upload data in the current time period.

4. The method of claim 3, wherein the adjusting of the subsequent time period includes:
calculating an occupation variable of the wireless communications channel for the current time period using the number of the electronic shelf labeling tags and the number of the time slots; and
determining an assignment time of the subsequent time period by comparing a first occupation variable for a previous time period with a second occupation variable for the current time period.

5. The method of claim 4, wherein the determining of the assignment time of the current time period includes:
calculating weight according to a ratio of the second occupation variable to the first occupation variable; and
determining the assignment time of the subsequent time period by reflecting the weight in the assignment time of the current time period.

6. A method of operating an electronic shelf labeling system performed in electronic shelf labeling tags matched with a gateway in a ratio of 1 to N and capable of receiving download data provided from the gateway through a single wireless communications channel, the method comprising:
receiving, from the gateway, a control message including information regarding the subsequent time period for transmitting subsequent download data;
determining the subsequent time period using the control message and determining whether or not the single wireless communications channel is currently occupied when the subsequent time period arrives; and
when the single wireless communications channel is not occupied, transmitting upload data using the single wireless communications channel.

7. The method of claim 6, wherein the single wireless communications channel is divided into a plurality of time slots having a predetermined time interval assigned thereto, and
the information regarding the subsequent time period includes first time slot information regarding a point in time at which a time period starts and second time slot information regarding a point in time for terminating the time period.

8. The method of claim 6, wherein the determining of whether or not the single wireless communications channel is currently occupied includes transmitting clear channel assessment (CCA) for determining the occupation to the wireless communications channel to thereby determine whether or not the single wireless communications channel is currently occupied.

9. The method of claim 6, further comprising receiving the download data provided from the gateway.

10. An electronic shelf labeling system including a gateway and a plurality of electronic shelf labeling tags managed by the gateway, comprising:
a gateway broadcasting, to the plurality of electronic shelf labeling tags, a control message including information regarding a subsequent time period for transmitting subsequent download data, and transmitting the download data to at least a portion of the plurality of electronic shelf labeling tags when the subsequent time period arrives; and
a plurality of electronic shelf labeling tags transmitting upload data to the gateway by determining the subsequent time period using the control message and determining whether or not a single wireless communications channel is currently occupied when the subsequent time period arrives.

11. The electronic shelf labeling system of claim 10, wherein the gateway transmits and receives the download data, the control message, and the upload data to and from the plurality of electronic shelf labeling tags using the single wireless communications channel.

12. The electronic shelf labeling system of claim 11, wherein the single wireless communications channel is divided into a plurality of time slots having a predetermined time interval assigned thereto, and
the information regarding the subsequent time period includes first time slot information regarding a point in time at which a time period starts and second time slot information regarding a point in time for terminating the time period.

13. The electronic shelf labeling system of claim 12, wherein the gateway adjusts the subsequent time period using the number of the electronic shelf labeling tags occupying the wireless communications channel or the number of time slots used by the upload data in the current time period.

14. The electronic shelf labeling system of claim 13, wherein the gateway calculates an occupation variable of the wireless communications channel for the current time period using the number of the electronic shelf labeling tags and the number of the time slots and determines assignment time of the current time period by comparing a first occupation variable for a previous time period with a second occupation variable for the current time period.
